# EUROPEAN PATENT SPECIFICATION

(11) **EP 4 228 308 B1**
(45) Date of publication and mention of the grant of the patent: **29.01.2025**
(21) Application number: 22198147.5
(22) Date of filing: 27.09.2022
(51) Int. Cl.: H04W 24/00, H04L 5/00, H04W 76/19, H04B 7/08, H04W 76/15, H04W 72/02, H04W 74/0833

(54) **METHOD AND APPARATUS FOR RACH-LESS SCG-ACTIVATION IN A WIRELESS COMMUNICATION SYSTEM**
VERFAHREN UND VORRICHTUNG ZUR RACH-LOSEN SCG-AKTIVIERUNG IN EINEM DRAHTLOSEN KOMMUNIKATIONSSYSTEM
PROCÉDÉ ET APPAREIL D'ACTIVATION SCG SANS RACH DANS UN SYSTÈME DE COMMUNICATION SANS FIL

(30) Priority: 13.02.2022 US 202263309644 P
(43) Date of publication of application: 16.08.2023
(73) Proprietor: LG ELECTRONICS INC., Yeongdeungpo-Gu Seoul 07336 (KR)
(72) Inventor: KIM, Myoungsoo, 06772 SEOUL (KR); JUNG, Sunghoon, 06772 SEOUL (KR); KIM, Hongsuk, 06772 SEOUL (KR)
(74) Representative: Plasseraud IP

(56) References cited:
- QUALCOMM INCORPORATED: "UE behavior in deactivated SCG and SCG deactivation", vol. RAN WG2, no. Online; 20220117 - 20220125, 11 January 2022 (2022-01-11), XP052094185, Retrieved from the Internet <URL:https://ftp.3gpp.org/tsg_ran/WG2_RL2/TSGR2_116bis-e/Docs/R2-2201075.zip R2-2201075.docx> [retrieved on 20220111]
- ZTE CORPORATION ET AL: "Discussion on UE behavior when SCG is deactivated", vol. RAN WG2, no. e-meeting; 20220117 - 20220125, 11 January 2022 (2022-01-11), XP052093742, Retrieved from the Internet <URL:https://ftp.3gpp.org/tsg_ran/WG2_RL2/TSGR2_116bis-e/Docs/R2-2200604.zip R2-2200604 Discussion on UE behaviour when SCG is deactivated.docx> [retrieved on 20220111]
- INTERDIGITAL INC: "Measurements while the SCG is deactivated", vol. RAN WG2, no. Electronic; 20220117 - 20220125, 11 January 2022 (2022-01-11), XP052094734, Retrieved from the Internet <URL:https://ftp.3gpp.org/tsg_ran/WG2_RL2/TSGR2_116bis-e/Docs/R2-2201640.zip R2-2201640 - Measurement while the SCG is deactivated.doc> [retrieved on 20220111]
- NTTDOCOMO ET AL: "UE behavior in a deactivated SCG", vol. RAN WG2, no. Electronic meeting; 20210809 - 20210827, 6 August 2021 (2021-08-06), XP052034053, Retrieved from the Internet <URL:https://ftp.3gpp.org/tsg_ran/WG2_RL2/TSGR2_115-e/Docs/R2-2107328.zip R2-2107328_UE behavior in deactivated SCG.docx> [retrieved on 20210806]
- CATT: "Discussion on SCG Deactivation and UE Behavior", vol. RAN WG2, no. electronic; 20220117 - 20220125, 11 January 2022 (2022-01-11), XP052094349, Retrieved from the Internet <URL:https://ftp.3gpp.org/tsg_ran/WG2_RL2/TSGR2_116bis-e/Docs/R2-2201248.zip R2-2201248.docx> [retrieved on 20220111]
- ZTE CORPORATION: "Introduction of SCG deactivation and activation", vol. RAN WG2, no. E-meeting; 20220117 - 20220125, 31 January 2022 (2022-01-31), XP052104451, Retrieved from the Internet <URL:https://ftp.3gpp.org/tsg_ran/WG2_RL2/TSGR2_116bis-e/Docs/R2-2202032.zip R2-2202032 Running 37.340 CR for SCG deactivation.docx> [retrieved on 20220131]

## Description

### BACKGROUND

### Technical Field

The present disclosure relates to a method and apparatus for RACH-less activation in a wireless communication system.

### Related Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible. Document: QUALCOMM INCORPORATED, "UE behavior in deactivated SCG and SCG deactivation", vol. RAN WG2, no. Online; 20220117 - 20220125, (20220111), 3GPP DRAFT; R2-2201075, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: https://ftp.3gpp.org/tsg_ran/WG2_RL2/TSGR2_116bis-e/Docs/R2-2201075.zip R2-2201075.docx, (20220111), relates to SCG deactivation. Document: ZTE CORPORATION ET AL, "Discussion on UE behavior when SCG is deactivated", vol. RAN WG2, no. e-meeting; 20220117 - 20220125, (20220111), 3GPP DRAFT; R2-2200604, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: https://ftp.3gpp.org/tsg_ran/WG2_RL2/TSGR2_116bis-e/Docs/R2-2200604.zip R2-2200604 Discussion on UE behaviour when SCG is deactivated.docx, (20220111), also relates to SCG deactivation procedure. Document: INTERDIGITAL INC, "Measurements while the SCG is deactivated", vol. RAN WG2, no. Electronic; 20220117 - 20220125, (20220111), 3GPP DRAFT; R2-2201640, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: https://ftp.3gpp.org/tsg_ran/WG2_RL2/TSGR2_116bis-e/Docs/R2-2201640.zip R2-2201640 - Measurement while the SCG is deactivated.doc, (20220111), relates to measurements while SCG is deactivated.

### SUMMARY

### Technical Objects

In NR, Secondary Cell Group (SCG) activation and/or SCG deactivation may be supported. For example, a wireless device may deactivate and/or activate an SCG.

In addition, in order to activate a deactivated SCG, RACH-less activation may be applied. Since a wireless device could activate an SCG without a RACH procedure, the resources for activating the SCG could be saved.

Therefore, studies for RACH-less activation in a wireless communication system are required.

### Technical Solutions

In an aspect, a method according to claim 1 is provided.

In other aspects, an apparatus for implementing the above method according to claim 7 and a computer readable medium according to claim 8 are provided.

### Technical Effects

The present disclosure can have various advantageous effects.

According to some embodiments of the present disclosure, a wireless device could efficiently activate an SCG without a RACH procedure by maintaining a valid TA timer.

In other words, the valid TA timer remaining upon SCG reactivation may be an important factor for RACH-less activation. The reason that the wireless device sends the SCG failure information message may be to obtain reconfiguration for RACH-less activation, so the TA timer should continue to run during the SCG failure information procedure. Therefore, according to the present disclosure, skipping MAC reset during SCG failure information procedure in SCG deactivated state could be beneficial for RACH-less activation, that is, fast SCG activation.

In the case of BF, since a TA timer could be maintained, RACH-less activation could be efficiently performed.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows another example of wireless devices to which implementations of the present disclosure is applied.
FIG. 5 shows an example of UE to which implementations of the present disclosure is applied.
FIGS. 6 and 7 show an example of protocol stacks in a 3GPP based wireless communication system to which implementations of the present disclosure is applied.
FIG. 8 shows a frame structure in a 3GPP based wireless communication system to which implementations of the present disclosure is applied.
FIG. 9 shows a data flow example in the 3GPP NR system to which implementations of the present disclosure is applied.
FIG. 10 shows an example of an SCG failure information procedure.
FIG. 11 shows an example of a method for RACH-less activation in a wireless communication system, according to some embodiments of the present disclosure.
FIG. 12 shows an example of a method for skipping MAC reset during SCG failure information procedure in a wireless communication system, according to some embodiments of the present disclosure.
FIG. 13 shows an example of UE operations for RACH-less activation in a wireless communication system are described.
FIG. 14 shows an example of Base Station (BS) operations for RACH-less activation in a wireless communication system, according to some embodiments of the present disclosure.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. LTE-advanced (LTE-A) is an evolved version of 3GPP LTE.

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

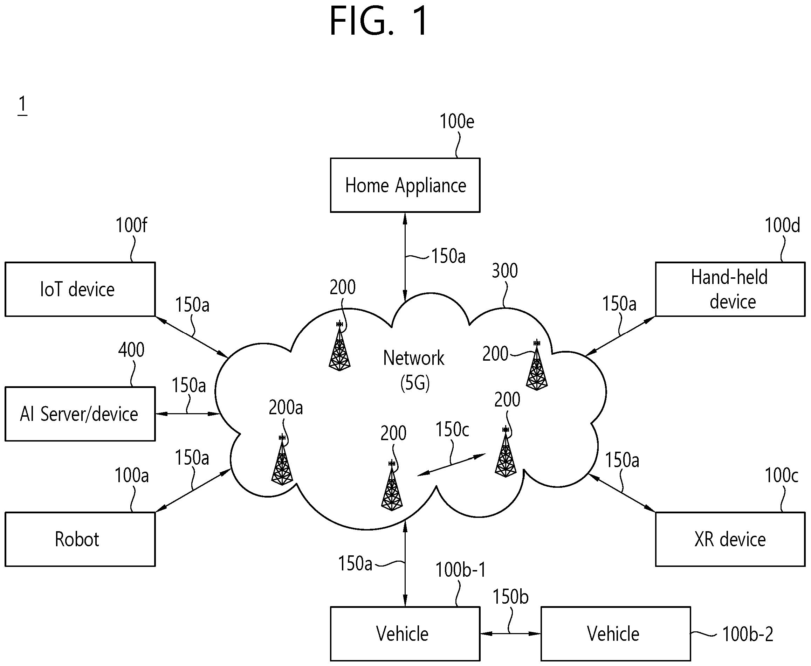

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

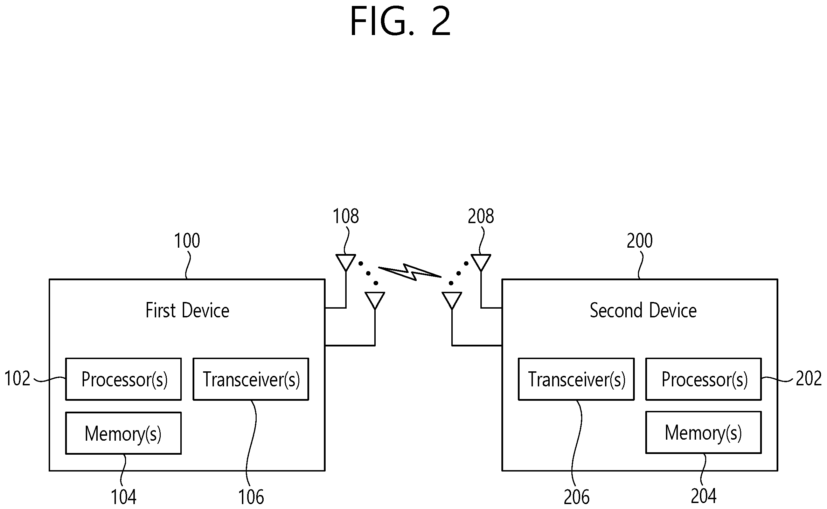

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR). In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, suggestions, methods and/or operational flowcharts described in the present disclosure. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, suggestions, methods and/or operational flowcharts described in the present disclosure. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with radio frequency (RF) unit(s). In the present disclosure, the first wireless device 100 may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, suggestions, methods and/or operational flowcharts described in the present disclosure. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, suggestions, methods and/or operational flowcharts described in the present disclosure. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas may be a plurality of physical antennas or a plurality of logical antennas (e.g., antenna ports).

The one or more transceivers 106 and 206 may convert received radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the transceivers 106 and 206 can up-convert OFDM baseband signals to a carrier frequency by their (analog) oscillators and/or filters under the control of the processors 102 and 202 and transmit the up-converted OFDM signals at the carrier frequency. The transceivers 106 and 206 may receive OFDM signals at a carrier frequency and down-convert the OFDM signals into OFDM baseband signals by their (analog) oscillators and/or filters under the control of the transceivers 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

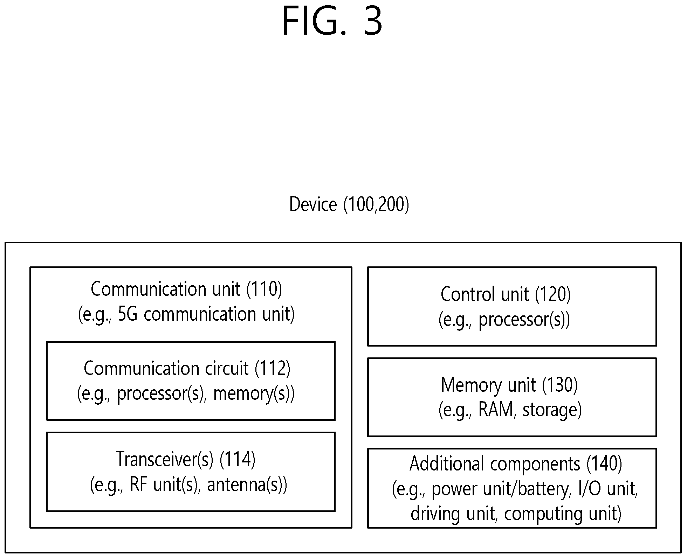

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory 130 may be configured by a RAM, a DRAM, a ROM, a flash memory, a volatile memory, a non-volatile memory, and/or a combination thereof.

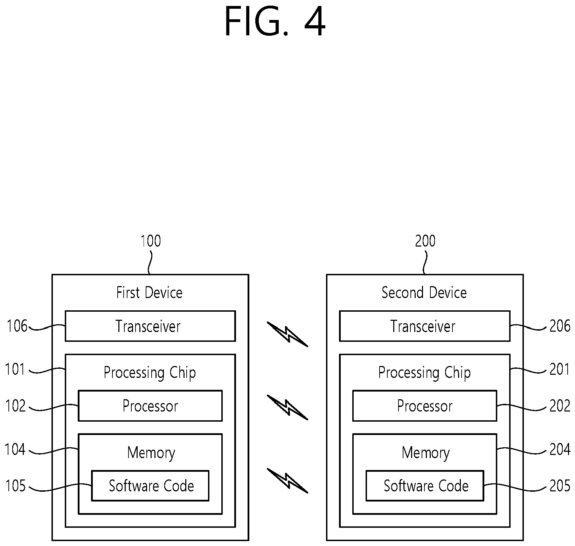

FIG. 4 shows another example of wireless devices to which implementations of the present disclosure is applied.

Referring to FIG. 4, wireless devices 100 and 200 may correspond to the wireless devices 100 and 200 of FIG. 2 and may be configured by various elements, components, units/portions, and/or modules.

The first wireless device 100 may include at least one transceiver, such as a transceiver 106, and at least one processing chip, such as a processing chip 101. The processing chip 101 may include at least one processor, such a processor 102, and at least one memory, such as a memory 104. The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 may perform one or more layers of the radio interface protocol.

The second wireless device 200 may include at least one transceiver, such as a transceiver 206, and at least one processing chip, such as a processing chip 201. The processing chip 201 may include at least one processor, such a processor 202, and at least one memory, such as a memory 204. The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 may perform one or more layers of the radio interface protocol.

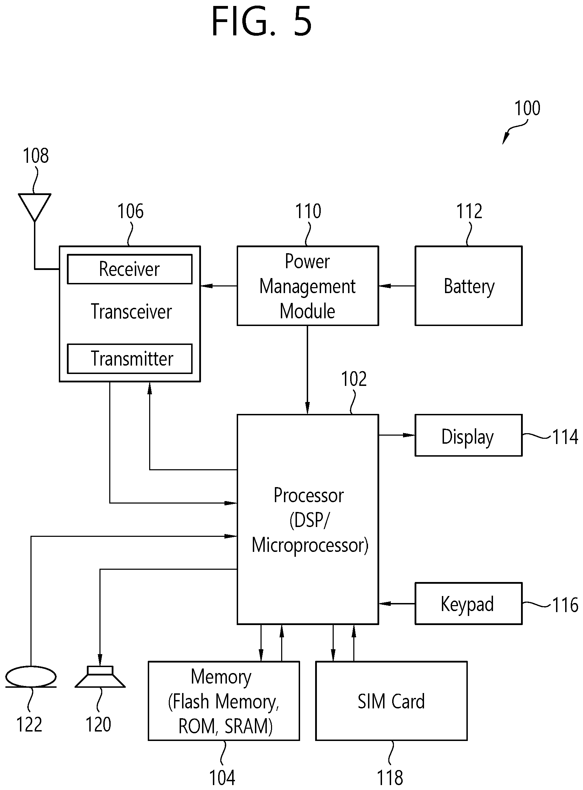

FIG. 5 shows an example of UE to which implementations of the present disclosure is applied.

Referring to FIG. 5, a UE 100 may correspond to the first wireless device 100 of FIG. 2 and/or the first wireless device 100 of FIG. 4.

A UE 100 includes a processor 102, a memory 104, a transceiver 106, one or more antennas 108, a power management module 110, a battery 1112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 16 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

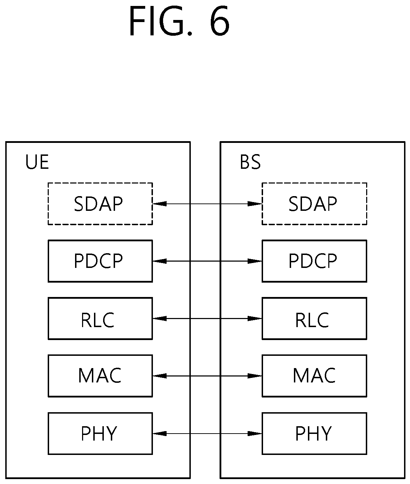

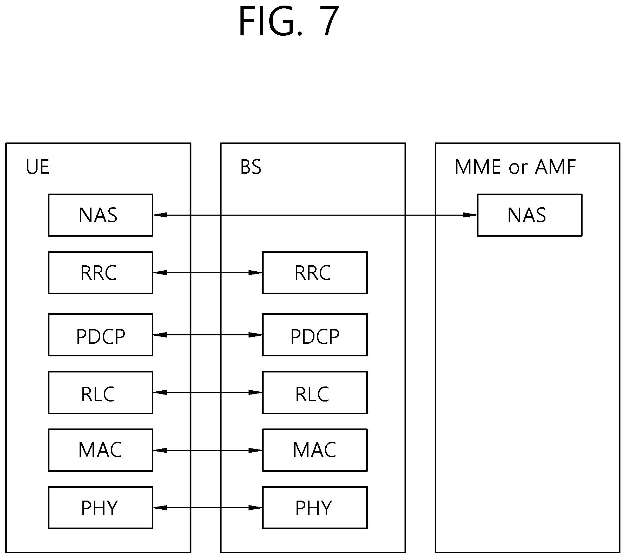

FIGS. 6 and 7 show an example of protocol stacks in a 3GPP based wireless communication system to which implementations of the present disclosure is applied.

In particular, FIG. 6 illustrates an example of a radio interface user plane protocol stack between a UE and a BS and FIG. 7 illustrates an example of a radio interface control plane protocol stack between a UE and a BS. The control plane refers to a path through which control messages used to manage call by a UE and a network are transported. The user plane refers to a path through which data generated in an application layer, for example, voice data or Internet packet data are transported. Referring to FIG. 6, the user plane protocol stack may be divided into Layer 1 (i.e., a PHY layer) and Layer 2. Referring to FIG. 7, the control plane protocol stack may be divided into Layer 1 (i.e., a PHY layer), Layer 2, Layer 3 (e.g., an RRC layer), and a non-access stratum (NAS) layer. Layer 1, Layer 2 and Layer 3 are referred to as an access stratum (AS).

In the 3GPP LTE system, the Layer 2 is split into the following sublayers: MAC, RLC, and PDCP. In the 3GPP NR system, the Layer 2 is split into the following sublayers: MAC, RLC, PDCP and SDAP. The PHY layer offers to the MAC sublayer transport channels, the MAC sublayer offers to the RLC sublayer logical channels, the RLC sublayer offers to the PDCP sublayer RLC channels, the PDCP sublayer offers to the SDAP sublayer radio bearers. The SDAP sublayer offers to 5G core network quality of service (QoS) flows.

In the 3GPP NR system, the main services and functions of the MAC sublayer include: mapping between logical channels and transport channels; multiplexing/de-multiplexing of MAC SDUs belonging to one or different logical channels into/from transport blocks (TB) delivered to/from the physical layer on transport channels; scheduling information reporting; error correction through hybrid automatic repeat request (HARQ) (one HARQ entity per cell in case of carrier aggregation (CA)); priority handling between UEs by means of dynamic scheduling; priority handling between logical channels of one UE by means of logical channel prioritization; padding. A single MAC entity may support multiple numerologies, transmission timings and cells. Mapping restrictions in logical channel prioritization control which numerology(ies), cell(s), and transmission timing(s) a logical channel can use.

Different kinds of data transfer services are offered by MAC. To accommodate different kinds of data transfer services, multiple types of logical channels are defined, i.e., each supporting transfer of a particular type of information. Each logical channel type is defined by what type of information is transferred. Logical channels are classified into two groups: control channels and traffic channels. Control channels are used for the transfer of control plane information only, and traffic channels are used for the transfer of user plane information only. Broadcast control channel (BCCH) is a downlink logical channel for broadcasting system control information, paging control channel (PCCH) is a downlink logical channel that transfers paging information, system information change notifications and indications of ongoing public warning service (PWS) broadcasts, common control channel (CCCH) is a logical channel for transmitting control information between UEs and network and used for UEs having no RRC connection with the network, and dedicated control channel (DCCH) is a point-to-point bi-directional logical channel that transmits dedicated control information between a UE and the network and used by UEs having an RRC connection. Dedicated traffic channel (DTCH) is a point-to-point logical channel, dedicated to one UE, for the transfer of user information. A DTCH can exist in both uplink and downlink. In downlink, the following connections between logical channels and transport channels exist: BCCH can be mapped to broadcast channel (BCH); BCCH can be mapped to downlink shared channel (DL-SCH); PCCH can be mapped to paging channel (PCH); CCCH can be mapped to DL-SCH; DCCH can be mapped to DL-SCH; and DTCH can be mapped to DL-SCH. In uplink, the following connections between logical channels and transport channels exist: CCCH can be mapped to uplink shared channel (UL-SCH); DCCH can be mapped to UL-SCH; and DTCH can be mapped to UL-SCH.

The RLC sublayer supports three transmission modes: transparent mode (TM), unacknowledged mode (UM), and acknowledged node (AM). The RLC configuration is per logical channel with no dependency on numerologies and/or transmission durations. In the 3GPP NR system, the main services and functions of the RLC sublayer depend on the transmission mode and include: transfer of upper layer PDUs; sequence numbering independent of the one in PDCP (UM and AM); error correction through ARQ (AM only); segmentation (AM and UM) and re-segmentation (AM only) of RLC SDUs; reassembly of SDU (AM and UM); duplicate detection (AM only); RLC SDU discard (AM and UM); RLC re-establishment; protocol error detection (AM only).

In the 3GPP NR system, the main services and functions of the PDCP sublayer for the user plane include: sequence numbering; header compression and decompression using robust header compression (ROHC); transfer of user data; reordering and duplicate detection; in-order delivery; PDCP PDU routing (in case of split bearers); retransmission of PDCP SDUs; ciphering, deciphering and integrity protection; PDCP SDU discard; PDCP re-establishment and data recovery for RLC AM; PDCP status reporting for RLC AM; duplication of PDCP PDUs and duplicate discard indication to lower layers. The main services and functions of the PDCP sublayer for the control plane include: sequence numbering; ciphering, deciphering and integrity protection; transfer of control plane data; reordering and duplicate detection; in-order delivery; duplication of PDCP PDUs and duplicate discard indication to lower layers.

In the 3GPP NR system, the main services and functions of SDAP include: mapping between a QoS flow and a data radio bearer; marking QoS flow ID (QFI) in both DL and UL packets. A single protocol entity of SDAP is configured for each individual PDU session.

In the 3GPP NR system, the main services and functions of the RRC sublayer include: broadcast of system information related to AS and NAS; paging initiated by 5GC or NG-RAN; establishment, maintenance and release of an RRC connection between the UE and NG-RAN; security functions including key management; establishment, configuration, maintenance and release of signaling radio bearers (SRBs) and data radio bearers (DRBs); mobility functions (including: handover and context transfer, UE cell selection and reselection and control of cell selection and reselection, inter-RAT mobility); QoS management functions; UE measurement reporting and control of the reporting; detection of and recovery from radio link failure; NAS message transfer to/from NAS from/to UE.

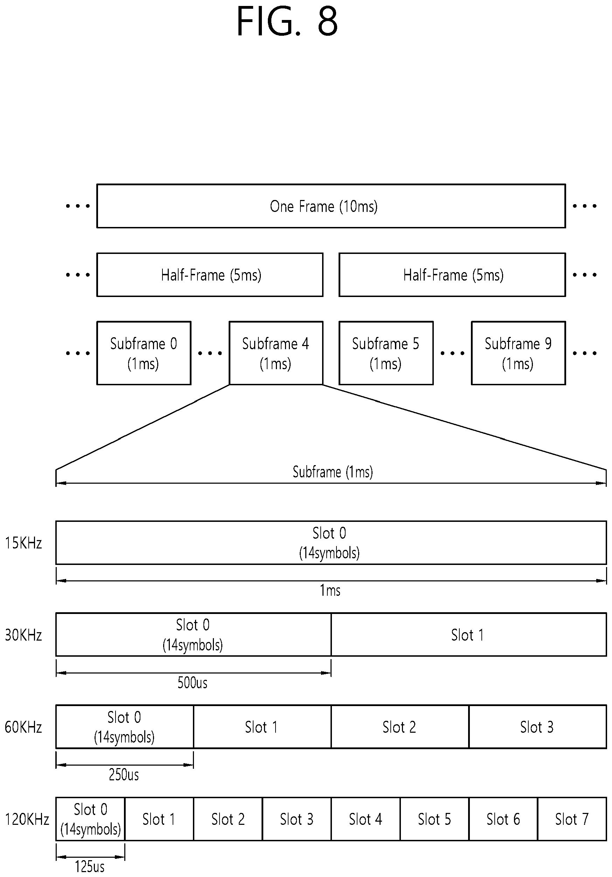

FIG. 8 shows a frame structure in a 3GPP based wireless communication system to which implementations of the present disclosure is applied.

The frame structure shown in FIG. 8 is purely exemplary and the number of subframes, the number of slots, and/or the number of symbols in a frame may be variously changed. In the 3GPP based wireless communication system, OFDM numerologies (e.g., subcarrier spacing (SCS), transmission time interval (TTI) duration) may be differently configured between a plurality of cells aggregated for one UE. For example, if a UE is configured with different SCSs for cells aggregated for the cell, an (absolute time) duration of a time resource (e.g., a subframe, a slot, or a TTI) including the same number of symbols may be different among the aggregated cells. Herein, symbols may include OFDM symbols (or CP-OFDM symbols), SC-FDMA symbols (or discrete Fourier transform-spread-OFDM (DFT-s-OFDM) symbols).

Referring to FIG. 8, downlink and uplink transmissions are organized into frames. Each frame has T_{f} = 10ms duration. Each frame is divided into two half-frames, where each of the half-frames has 5ms duration. Each half-frame consists of 5 subframes, where the duration T_{sf} per subframe is 1ms. Each subframe is divided into slots and the number of slots in a subframe depends on a subcarrier spacing. Each slot includes 14 or 12 OFDM symbols based on a cyclic prefix (CP). In a normal CP, each slot includes 14 OFDM symbols and, in an extended CP, each slot includes 12 OFDM symbols. The numerology is based on exponentially scalable subcarrier spacing Δf = 2^{u}*15 kHz.

Table 1 shows the number of OFDM symbols per slot N^{slot}_{symb}, the number of slots per frame N^{frame,u}ₛₗₒₜ, and the number of slots per subframe N^{subframe,u}ₛₗₒₜ for the normal CP, according to the subcarrier spacing Δf = 2^{u}*15 kHz.

**[Table 1]**

| *u* | *N*^{slot} _{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows the number of OFDM symbols per slot N^{slot}_{symb}, the number of slots per frame N^{frame,u}ₛₗₒₜ, and the number of slots per subframe N^{subframe,u}ₛₗₒₜ for the extended CP, according to the subcarrier spacing Δf = 2^{u}*15 kHz.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

A slot includes plural symbols (e.g., 14 or 12 symbols) in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at common resource block (CRB) *N*^{start,u}_{grid} indicated by higher-layer signaling (e.g., RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP based wireless communication system, *N*^{RB}_{sc} is 12 generally. There is one resource grid for a given antenna port *p,* subcarrier spacing configuration *u,* and transmission direction (DL or UL). The carrier bandwidth *N*^{size,u}_{grid} for subcarrier spacing configuration *u* is given by the higher-layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the 3GPP based wireless communication system, an RB is defined by 12 consecutive subcarriers in the frequency domain.

In the 3GPP NR system, RBs are classified into CRBs and physical resource blocks (PRBs). CRBs are numbered from 0 and upwards in the frequency domain for subcarrier spacing configuration *u.* The center of subcarrier 0 of CRB 0 for subcarrier spacing configuration *u* coincides with 'point A' which serves as a common reference point for resource block grids. In the 3GPP NR system, PRBs are defined within a bandwidth part (BWP) and numbered from 0 to *N*^{size}_{BWP,i}-1, where i is the number of the bandwidth part. The relation between the physical resource block n_{PRB} in the bandwidth part i and the common resource block n_{CRB} is as follows: n_{PRB} = n_{CRB} + *N*^{size}_{BWP,i}, where *N*^{size}_{BWP,i} is the common resource block where bandwidth part starts relative to CRB 0. The BWP includes a plurality of consecutive RBs. A carrier may include a maximum of N (e.g., 5) BWPs. A UE may be configured with one or more BWPs on a given component carrier. Only one BWP among BWPs configured to the UE can active at a time. The active BWP defines the UE's operating bandwidth within the cell's operating bandwidth.

The NR frequency band may be defined as two types of frequency range, i.e., FR1 and FR2. The numerical value of the frequency range may be changed. For example, the frequency ranges of the two types (FR1 and FR2) may be as shown in Table 3 below. For ease of explanation, in the frequency ranges used in the NR system, FR1 may mean "sub 6 GHz range", FR2 may mean "above 6 GHz range," and may be referred to as millimeter wave (mmW).

**[Table 3]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 4 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 4]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In the present disclosure, the term "cell" may refer to a geographic area to which one or more nodes provide a communication system, or refer to radio resources. A "cell" as a geographic area may be understood as coverage within which a node can provide service using a carrier and a "cell" as radio resources (e.g., time-frequency resources) is associated with bandwidth which is a frequency range configured by the carrier. The "cell" associated with the radio resources is defined by a combination of downlink resources and uplink resources, for example, a combination of a DL component carrier (CC) and a UL CC. The cell may be configured by downlink resources only, or may be configured by downlink resources and uplink resources. Since DL coverage, which is a range within which the node is capable of transmitting a valid signal, and UL coverage, which is a range within which the node is capable of receiving the valid signal from the UE, depends upon a carrier carrying the signal, the coverage of the node may be associated with coverage of the "cell" of radio resources used by the node. Accordingly, the term "cell" may be used to represent service coverage of the node sometimes, radio resources at other times, or a range that signals using the radio resources can reach with valid strength at other times.

In CA, two or more CCs are aggregated. A UE may simultaneously receive or transmit on one or multiple CCs depending on its capabilities. CA is supported for both contiguous and non-contiguous CCs. When CA is configured, the UE only has one RRC connection with the network. At RRC connection establishment/re-establishment/handover, one serving cell provides the NAS mobility information, and at RRC connection re-establishment/handover, one serving cell provides the security input. This cell is referred to as the primary cell (PCell). The PCell is a cell, operating on the primary frequency, in which the UE either performs the initial connection establishment procedure or initiates the connection re-establishment procedure. Depending on UE capabilities, secondary cells (SCells) can be configured to form together with the PCell a set of serving cells. An SCell is a cell providing additional radio resources on top of special cell (SpCell). The configured set of serving cells for a UE therefore always consists of one PCell and one or more SCells. For dual connectivity (DC) operation, the term SpCell refers to the PCell of the master cell group (MCG) or the primary SCell (PSCell) of the secondary cell group (SCG). An SpCell supports PUCCH transmission and contention-based random access, and is always activated. The MCG is a group of serving cells associated with a master node, comprised of the SpCell (PCell) and optionally one or more SCells. The SCG is the subset of serving cells associated with a secondary node, comprised of the PSCell and zero or more SCells, for a UE configured with DC. For a UE in RRC_CONNECTED not configured with CA/DC, there is only one serving cell comprised of the PCell. For a UE in RRC_CONNECTED configured with CA/DC, the term "serving cells" is used to denote the set of cells comprised of the SpCell(s) and all SCells. In DC, two MAC entities are configured in a UE: one for the MCG and one for the SCG.

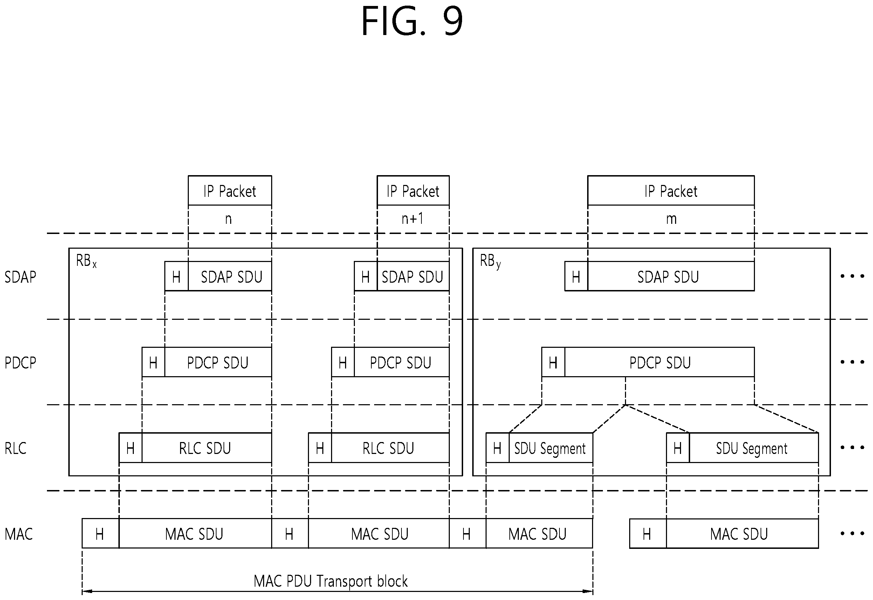

FIG. 9 shows a data flow example in the 3GPP NR system to which implementations of the present disclosure is applied.

Referring to FIG. 9, "RB" denotes a radio bearer, and "H" denotes a header. Radio bearers are categorized into two groups: DRBs for user plane data and SRBs for control plane data. The MAC PDU is transmitted/received using radio resources through the PHY layer to/from an external device. The MAC PDU arrives to the PHY layer in the form of a transport block.

In the PHY layer, the uplink transport channels UL-SCH and RACH are mapped to their physical channels PUSCH and PRACH, respectively, and the downlink transport channels DL-SCH, BCH and PCH are mapped to PDSCH, PBCH and PDSCH, respectively. In the PHY layer, uplink control information (UCI) is mapped to PUCCH, and downlink control information (DCI) is mapped to PDCCH. A MAC PDU related to UL-SCH is transmitted by a UE via a PUSCH based on an UL grant, and a MAC PDU related to DL-SCH is transmitted by a BS via a PDSCH based on a DL assignment.

Hereinafter, technical features related to SCG failure information are described. Section 5.7.3 of 3GPP TS 38.331 v16.7.0 may be referred.

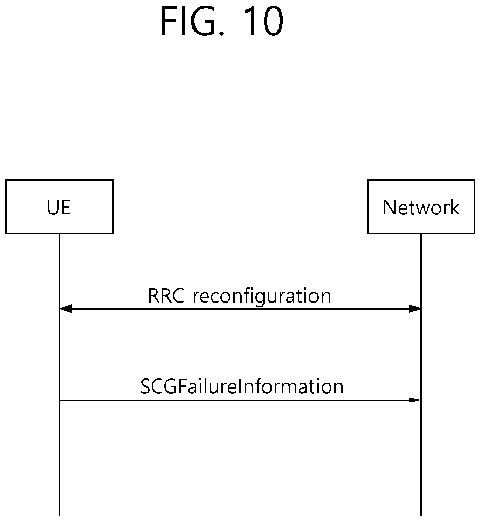

FIG. 10 shows an example of an SCG failure information procedure.

Referring to FIG. 10, the network may provide an RRC reconfiguration to the UE. The UE may transmit an SCG Failure Information to the network.

The purpose of this procedure is to inform E-UTRAN or NR MN about an SCG failure the UE has experienced i.e. SCG radio link failure, failure of SCG reconfiguration with sync, SCG configuration failure for RRC message on SRB3, SCG integrity check failure, and consistent uplink LBT failures on PSCell for operation with shared spectrum channel access.

A UE initiates the procedure to report SCG failures when neither MCG nor SCG transmission is suspended and when one of the following conditions is met:
1> upon detecting radio link failure for the SCG;
1> upon reconfiguration with sync failure of the SCG;
1> upon SCG configuration failure;
1> upon integrity check failure indication from SCG lower layers concerning SRB3.

Upon initiating the procedure, the UE shall:
1> suspend SCG transmission for all SRBs, DRBs and, if any, BH RLC channels;
1> reset SCG MAC;
1> stop T304 for the SCG, if running;
1> stop conditional reconfiguration evaluation for CPC, if configured;
1> if the UE is in (NG)EN-DC:
   2> initiate transmission of the *SCGFailureInformationNR* message.
1> else:
   2> initiate transmission of the *SCGFailureInformation* message.

Hereinafter, technical features related to MAC Reset are described. Section 5.12 of 3GPP TS 38.321 v16.7.0 may be referred.

If a reset of the MAC entity is requested by upper layers, the MAC entity shall:
1> initialize *Bj* for each logical channel to zero;
1> initialize *SBj* for each logical channel to zero if Sidelink resource allocation mode 1 is configured by RRC;
1> stop (if running) all timers;
1> consider all timeAlignmentTimers as expired and perform the corresponding actions for Maintenance of Uplink Time Alignment;
1> set the NDIs for all uplink HARQ processes to the value 0;
1> sets the NDIs for all HARQ process IDs to the value 0 for monitoring PDCCH in Sidelink resource allocation mode 1;
1> stop, if any, ongoing Random Access procedure;
1> discard explicitly signalled contention-free Random Access Resources for 4-step RA type and 2-step RA type, if any;
1> flush Msg3 buffer;
1> flush MSGA buffer;
1> cancel, if any, triggered Scheduling Request procedure;
1> cancel, if any, triggered Buffer Status Reporting procedure;
1> cancel, if any, triggered Power Headroom Reporting procedure;
1> cancel, if any, triggered consistent LBT failure;
1> cancel, if any, triggered BFR;
1> cancel, if any, triggered Sidelink Buffer Status Reporting procedure;
1> cancel, if any, triggered Pre-emptive Buffer Status Reporting procedure;
1> cancel, if any, triggered Recommended bit rate query procedure;
1> cancel, if any, triggered Configured uplink grant confirmation;
1> cancel, if any, triggered configured sidelink grant confirmation;
1> cancel, if any, triggered Desired Guard Symbol query;
1> flush the soft buffers for all DL HARQ processes;
1> for each DL HARQ process, consider the next received transmission for a TB as the very first transmission;
1> release, if any, Temporary C-RNTI;
1> reset all *BFI_COUNTERs*;
1> reset all *LBT_COUNTERs.*

If a Sidelink specific reset of the MAC entity is requested for a PC5-RRC connection by upper layers, the MAC entity shall:
1> flush the soft buffers for all Sidelink processes for all TB(s) associated to the PC5-RRC connection;
1> consider all Sidelink processes for all TB(s) associated to the PC5-RRC connection as unoccupied;
1> cancel, if any, triggered Scheduling Request procedure only associated to the PC5-RRC connection;
1> cancel, if any, triggered Sidelink Buffer Status Reporting procedure only associated to the PC5-RRC connection;
1> cancel, if any, triggered Sidelink CSI Reporting procedure associated to the PC5-RRC connection;
1> stop (if running) all timers associated to the PC5-RRC connection;
1> reset the *numConsecutiveDTX* associated to the PC5-RRC connection;
1> initialize *SBj* for each logical channel associated to the PC5-RRC connection to zero.

Hereinafter, technical features related to Beam Failure Detection and Recovery procedure are described. Section 5.17 of 3GPP TS 38.321 v16.7.0 may be referred.

The MAC entity may be configured by RRC per Serving Cell with a beam failure recovery procedure which is used for indicating to the serving gNB of a new SSB or CSI-RS when beam failure is detected on the serving SSB(s)/CSI-RS(s). Beam failure is detected by counting beam failure instance indication from the lower layers to the MAC entity. If *beamFailureRecoveryConfig* is reconfigured by upper layers during an ongoing Random Access procedure for beam failure recovery for SpCell, the MAC entity shall stop the ongoing Random Access procedure and initiate a Random Access procedure using the new configuration.

RRC configures the following parameters in the *BeamFailureRecoveryConfig, BeamFailureRecoverySCellConfig,* and the *RadioLinkMonitoringConfig* for the Beam Failure Detection and Recovery procedure:
- *beamFailurelnstanceMaxCount* for the beam failure detection;
- *beamFailureDetectionTimer* for the beam failure detection;
- *beamFailureRecoveryTimer* for the beam failure recovery procedure;
- *rsrp-ThresholdSSB*: an RSRP threshold for the SpCell beam failure recovery;
- *rsrp-ThresholdBFR:* an RSRP threshold for the SCell beam failure recovery;
- *powerRampingStep*: *powerRampingStep* for the SpCell beam failure recovery;
- *powerRampingStepHighPriority: powerRampingStepHighPriority* for the SpCell beam failure recovery;
- *preambleReceivedTargetPower*: *preambleReceivedTargetPower* for the SpCell beam failure recovery;
- *preambleTransMax*: *preambleTransMax* for the SpCell beam failure recovery;
- *scalingFactorBI*: *scalingFactorBI* for the SpCell beam failure recovery;
- *ssb-perRACH-Occasion: ssb-perRACH-Occasion* for the SpCell beam failure recovery using contention-free Random Access Resources;
- *ra-ResponseWindow*: the time window to monitor response(s) for the SpCell beam failure recovery using contention-free Random Access Resources;
- *prach-Configurationlndex: prach-Configurationlndex* for the SpCell beam failure recovery using contention-free Random Access Resources;
- *ra-ssb-OccasionMaskIndex*: *ra-ssb-OccasionMaskIndex* for the SpCell beam failure recovery using contention-free Random Access Resources;
- *ra-OccasionList*: *ra-OccasionList* for the SpCell beam failure recovery using contention-free Random Access Resources;
- *candidateBeamRSList*: list of candidate beams for SpCell beam failure recovery;
- *candidateBeamRSSCellList*: list of candidate beams for SCell beam failure recovery.

The following UE variables are used for the beam failure detection procedure:
- *BFI_COUNTER* (per Serving Cell): counter for beam failure instance indication which is initially set to 0.

The MAC entity shall for each Serving Cell configured for beam failure detection:
1> if beam failure instance indication has been received from lower layers:
   2> start or restart the *beamFailureDetectionTimer;*
   2> increment *BFI_COUNTER* by 1;
   2> if *BFI_COUNTER >= beamFailurelnstanceMaxCount:*
      3> if the Serving Cell is SCell:
         4> trigger a BFR for this Serving Cell;
      3> else:
         4> initiate a Random Access procedure (see clause 5.1) on the SpCell.
1> if the *beamFailureDetectionTimer* expires; or
1> if *beamFailureDetectionTimer, beamFailureInstanceMaxCount,* or any of the reference signals used for beam failure detection is reconfigured by upper layers associated with this Serving Cell:
   2> set *BFI_COUNTER* to 0.
1> if the Serving Cell is SpCell and the Random Access procedure initiated for SpCell beam failure recovery is successfully completed (see clause 5.1):
   2> set *BFI_COUNTER* to 0;
   2> stop the *beamFailureRecoveryTimer,* if configured;
   2> consider the Beam Failure Recovery procedure successfully completed.
1> else if the Serving Cell is SCell, and a PDCCH addressed to C-RNTI indicating uplink grant for a new transmission is received for the HARQ process used for the transmission of the BFR MAC CE or Truncated BFR MAC CE which contains beam failure recovery information of this Serving Cell; or
1> if the SCell is deactivated:
   2> set *BFI_COUNTER* to 0;
   2> consider the Beam Failure Recovery procedure successfully completed and cancel all the triggered BFRs for this Serving Cell.

The MAC entity shall:
1> if the Beam Failure Recovery procedure determines that at least one BFR has been triggered and not cancelled for an SCell for which evaluation of the candidate beams according to the requirements has been completed:
   2> if UL-SCH resources are available for a new transmission and if the UL-SCH resources can accommodate the BFR MAC CE plus its subheader as a result of LCP:
      3> instruct the Multiplexing and Assembly procedure to generate the BFR MAC CE.
   2> else if UL-SCH resources are available for a new transmission and if the UL-SCH resources can accommodate the Truncated BFR MAC CE plus its subheader as a result of LCP:
      3> instruct the Multiplexing and Assembly procedure to generate the Truncated BFR MAC CE.
   2> else:
      3> trigger the SR for SCell beam failure recovery for each SCell for which BFR has been triggered, not cancelled, and for which evaluation of the candidate beams according to the requirements has been completed.

All BFRs triggered for an SCell shall be cancelled when a MAC PDU is transmitted and this PDU includes a BFR MAC CE or Truncated BFR MAC CE which contains beam failure information of that SCell.

Hereinafter, technical features related to Activation/Deactivation of SCells are described. Section 5.9 of 3GPP TS 38.321 v16.7.0 may be referred.

If the MAC entity is configured with one or more SCells, the network may activate and deactivate the configured SCells. Upon configuration of an SCell, the SCell is deactivated unless the parameter *sCellState* is set to *activated* for the SCell by upper layers.

The configured SCell(s) is activated and deactivated by:
- receiving the SCell Activation/Deactivation MAC CE;
- configuring *sCellDeactivationTimer* timer per configured SCell (except the SCell configured with PUCCH, if any): the associated SCell is deactivated upon its expiry;
- configuring *sCellState* per configured SCell: if configured, the associated SCell is activated upon SCell configuration.

The MAC entity shall for each configured SCell:
1> if an SCell is configured with *sCellState* set to *activated* upon SCell configuration, or an SCell Activation/Deactivation MAC CE is received activating the SCell:
   2> if the SCell was deactivated prior to receiving this SCell Activation/Deactivation MAC CE; or
   2> if the SCell is configured with *sCellState* set to *activated* upon SCell configuration:
      3> if *firstActiveDownlinkBWP-Id* is not set to dormant BWP:
         4> activate the SCell according to the timing for MAC CE activation and according to the timing for direct SCell activation; i.e. apply normal SCell operation including:
            5> SRS transmissions on the SCell;
            5> CSI reporting for the SCell;
            5> PDCCH monitoring on the SCell;
            5> PDCCH monitoring for the SCell;
            5> PUCCH transmissions on the SCell, if configured.
      3> else (i.e. *firstActiveDownlinkBWP-Id* is set to dormant BWP):
         4> stop the *bwp-InactivityTimer* of this Serving Cell, if running.
      3> activate the DL BWP and UL BWP indicated by *firstActiveDownlinkBWP-Id* and *firstActiveUplinkBWP-Id* respectively.
   2> start or restart the *sCellDeactivationTimer* associated with the SCell according to the timing for MAC CE activation and according to the timing for direct SCell activation;
   2> if the active DL BWP is not the dormant BWP:
      3> (re-)initialize any suspended configured uplink grants of configured grant Type 1 associated with this SCell according to the stored configuration, if any, and to start in the symbol;
      3> trigger PHR.
1> else if an SCell Activation/Deactivation MAC CE is received deactivating the SCell; or
1> if the *sCellDeactivationTimer* associated with the activated SCell expires:
   2> deactivate the SCell according to the timing;
   2> stop the *sCellDeactivationTimer* associated with the SCell;
   2> stop the *bwp-InactivityTimer* associated with the SCell;
   2> deactivate any active BWP associated with the SCell;
   2> clear any configured downlink assignment and any configured uplink grant Type 2 associated with the SCell respectively;
   2> clear any PUSCH resource for semi-persistent CSI reporting associated with the SCell;
   2> suspend any configured uplink grant Type 1 associated with the SCell;
   2> flush all HARQ buffers associated with the SCell;
   2> cancel, if any, triggered consistent LBT failure for the SCell.
1> if PDCCH on the activated SCell indicates an uplink grant or downlink assignment; or
1> if PDCCH on the Serving Cell scheduling the activated SCell indicates an uplink grant or a downlink assignment for the activated SCell; or
1> if a MAC PDU is transmitted in a configured uplink grant and LBT failure indication is not received from lower layers; or
1> if a MAC PDU is received in a configured downlink assignment:
   2> restart the *sCellDeactivationTimer* associated with the SCell.
1> if the SCell is deactivated:
   2> not transmit SRS on the SCell;
   2> not report CSI for the SCell;
   2> not transmit on UL-SCH on the SCell;
   2> not transmit on RACH on the SCell;
   2> not monitor the PDCCH on the SCell;
   2> not monitor the PDCCH for the SCell;
   2> not transmit PUCCH on the SCell.

HARQ feedback for the MAC PDU containing SCell Activation/Deactivation MAC CE shall not be impacted by PCell, PSCell and PUCCH SCell interruptions due to SCell activation/deactivation.

When SCell is deactivated, the ongoing Random Access procedure on the SCell, if any, is aborted.

Hereinafter, technical features related to SCG activation in NR are described.

For example, when the SCG activation is indicated to the UE via the MCG, the UE behaviour may include one or more of the following options.
option 1: similar to reconfiguration with sync, i.e. the UE always initiates random access to the PSCell.
option 2: in certain cases, the UE does not initiate random access and monitors PDCCH on the PSCell (at the latest after the specified processing time). In this case, the SCG can schedule data transmission on the PDCCH

Related to option 2, for example, the UE may decide not to perform random access (one option to be selected):
option 2a: if the TA timer is still running and possibly other conditions
option 2b: based on the contents of the SCG activation indication

In addition, for option 2a): in the SCG deactivated state, the UE may monitor some DL beams (if the same as BFD or RLM) and, if the UE sees that the beams are not good enough, the UE either (one of the options to be selected): (1) will perform random access upon reception of the next SCG activation indication from the MCG, and (2) will report measurement results via the MCG and wait for reconfiguration.

For example, the UE may not perform RACH after TAT expires while the SCG is deactivated.

At PSCell addition/change/HO/RRC resume, in case the SCG state is configured as deactivated, the UE may not perform random access. If the network wants the UE to perform random access, it can indicate the SCG as activated and deactivate it after the random access by RRC or MAC CE if supported.

Network should ensure PDCP entity and RLC entity are "cleaned" when doing SCG (de)activation, e.g. using PDCP data recovery and RLC re-establishment or RLC entity release.

For example, upon SCG deactivation, UE may instruct the SCG MAC entity to perform partial MAC reset.

For example, upon SCG deactivation, UE may keep all timeAlignmentTimers (e.g. associated with the PTAG and STAG) running, if configured.

For example, UE implementation may ensure that data loss for pre-processed data of UM DRB inside UE (e.g. due to RLC/PDCP re-establishment) is avoided upon SCG activation.

For example, upon SCG deactivation, the reordering delay for UM DRB can be resolved by UE implementation.

For example, UE may not suspend SRB3 upon SCG deactivation.

For example, the old RRC message for SRB3 may be discarded upon SCG deactivation (i.e. trigger the PDCP entity to perform SDU discard and re-establish the RLC entity for SRB3).

For example, upon BF while the SCG is deactivated: UE may indicate BF to NW via RRC (e.g. so the network can reconfigure the UE to keep the PSCell and allow RACH-less activation (by changing BFD RS), or change the PSCell or release the SCG). If the network does not reconfigure the UE and activates the SCG, RACH will be used.

For example, UE may stop (if running) all timers except beamFailureDetectionTimer associated with PSCell and timeAlignmentTimers upon SCG deactivation as a part of partial MAC reset.

For example, if BFD is not configured for deactivated SCG, UE may stop (if running) beamFailureDetectionTimer associated with PSCell upon SCG deactivation as a part of partial MAC reset.

As described above, in NR, Secondary Cell Group (SCG) activation and/or SCG deactivation may be supported. For example, a wireless device may deactivate and/or activate an SCG.

In addition, in order to activate a deactivated SCG, RACH-less activation may be applied. Since a wireless device could activate an SCG without a RACH procedure, the resources for activating the SCG could be saved.

Therefore, studies for RACH-less activation in a wireless communication system are required.

Hereinafter, a method for RACH-less activation in a wireless communication system, according to some embodiments of the present disclosure, will be described with reference to the following drawings.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings. Herein, a wireless device may be referred to as a user equipment (UE).

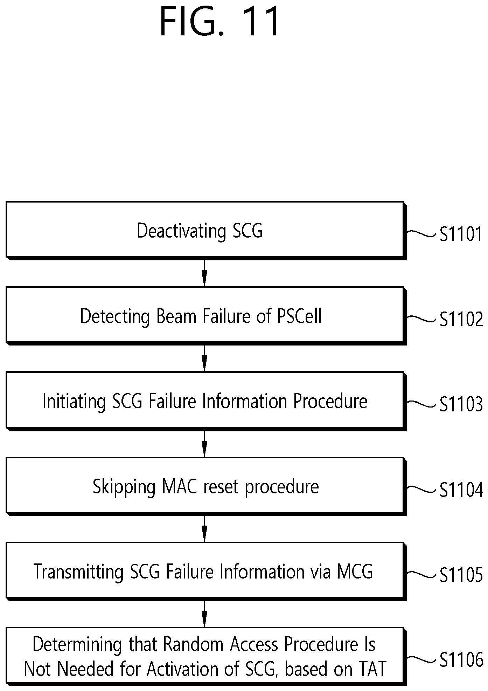

FIG. 11 shows an example of a method for RACH-less activation in a wireless communication system, according to some embodiments of the present disclosure.

In particular, FIG. 11 shows an example of a method performed by a wireless device in a wireless communication system.

In step S1101, a wireless device deactivates a Secondary Cell Group (SCG).

For example, the wireless device may receive, from a network, a configuration for beam failure detection for the SCG. For example, the configuration for beam failure detection may be received before deactivating the SCG.

For example, the wireless device may keep the time alignment timer (TAT) running, upon deactivating the SCG. In other words, even though deactivating the SCG, the wireless device may not stop the TAT, since the beam failure detection is configured.

For example, Physical Downlink Control Channel (PDCCH) monitoring and/or Physical Uplink Shared Channel (PUSCH) transmission for the SCG may be not performed by the wireless device, while the SCG is deactivated.

In step S1102, a wireless device detects a beam failure of a Primary SCell (PSCell) in the SCG.

For example, the lower layers (for example, physical layer) of the wireless device may detect a beam failure instance of the PSCell and indicate the beam failure instance to the upper layers (For example, a MAC layer).

In step S1103, a wireless device initiates a SCG failure information procedure to report the SCG failure.

That is, the wireless device initiates the SCG failure information procedure upon detecting the beam failure.

In step S1104, a wireless device skips a Media Access Control (MAC) reset procedure. The MAC reset procedure includes stopping a Time Alignment Timer (TAT) for the SCG.

In other words, in the SCG failure information procedure, the wireless device may not perform the MAC reset.

If the wireless device perform the MAC reset in the SCG failure information procedure, the TAT may be expired. Since the MAC reset procedure, which is not for the SCG deactivation, includes a step of stopping the TAT for the SCG. However, according to step S1104, since the wireless device skips the MAC reset procedure, the TAT could be maintained.

In step S1105, a wireless device transmits SCG failure information.

For example, a wireless device may transmit SCG failure information via a Master Cell Group (MCG).

In other words, in the SCG failure information procedure, the wireless device may transmit SCG failure information via the Master Cell Group (MCG) to the network.

In step S1106, a wireless device determines that a random access procedure is not needed for activation of the SCG, based on the TAT being not expired.

For example, the wireless device activates the SCG based on the TAT without performing a random access procedure.

In other words, the wireless device performs the RACH-less activation while the TAT is running.

According to some embodiments of the present disclosure, the wireless device may configure a beam failure instance counter and a beam failure detection timer. The wireless device may increment the beam failure instance counter by 1, when the lower layers of the wireless device detects a beam failure instance for the PSCell. For example, the wireless device may perform the RACH-less activation for the PSCell, when (1) the value of the beam failure instance counter for the PSCell is less than a maximum value and (2) the TAT associated with a Primary Timing Advance Group (PTAG) related to the PSCell is running.

For other example, when (1) the value of the beam failure instance counter for the PSCell is greater than or equal to a maximum value, or (2) the TAT associated with a PTAG related to the PSCell is not running, the wireless device may not perform the RACH-less activation for the PSCell and determine that the random access procedure is needed for SCG activation.

According to some embodiments of the present disclosure, the wireless device may receive, from a network, a configuration for radio link failure detection for the SCG. For example, the configuration for radio link failure detection may be received before deactivating the SCG, as in step S1101.

The wireless device may detect a radio link failure of the PSCell in the SCG.

The wireless device may initiate a SCG failure information procedure to report the SCG failure, as in step S1103.

The wireless device may perform a MAC reset procedure including the step of stopping a TAT for the SCG. That is, the wireless device may perform the MAC reset procedure in the SCG failure information procedure. Then, the TAT for the SCG may be expired upon performing the MAC reset procedure.

In this example, the wireless device may determine that a random access procedure is needed for activation of the SCG, based on the TAT is expired.

The wireless device may activate the SCG by performing a random access procedure. In other words, the random access procedure may be needed for activation of the SCG, after detecting the radio link failure.

According to some embodiments of the present disclosure, a wireless device may receive, from a network, (1) a radio resource control (RRC) Reconfiguration message and/or (2) an RRC Resume message including the RRC Reconfiguration message. The wireless device may perform the activation of the SCG.

For example, upon receiving the RRC Reconfiguration message, the wireless device may initiate the activation of the SCG.

For example, the wireless device may skip to perform the random access procedure for the activation of the SCG, based on the RRC Reconfiguration message not including a reconfigurationWithSync.

For example, the RRC Reconfiguration message may include cell group configuration (for example, cell group configuration for the SCG). The cell group configuration may include special cell (spCell) configuration (for example the spCell configuration for the PSCell). The spCell configuration may or may not include the reconfigurationWithSync.

For example, the wireless device may skip to perform the random access procedure for the activation of the SCG, based on (1) beam failure detection (BFD) and radio link monitoring (RLM) being configured before reception of the RRC Reconfiguration message, and (2) determining that the random access procedure is not needed for activation of the SCG.

For other example, the wireless device may skip to perform the random access procedure for the activation of the SCG, based on (1) the RRC Reconfiguration message not including a reconfigurationWithSync, (2) beam failure detection (BFD) and radio link monitoring (RLM) being configured before reception of the RRC Reconfiguration message, and (3) the determination that a random access procedure is not needed for activation of the SCG, as in step S1106.

According to some embodiments of the present disclosure, the wireless device may be in communication with at least one of a user equipment, a network, or an autonomous vehicle other than the wireless device.

Hereinafter, embodiments of a method for skipping MAC reset during SCG failure information procedure in a wireless communication system are described.

For example, when a UE is configured for NR-DC operation, an SCG could be deactivated for power saving. In SCG deactivated state, there may be no PDCCH monitoring and PUSCH transmission in SCG. However, for the RACH-less activation, the UE may keep all SCG timeAlignmentTimers (TAT) running upon SCG deactivation and may perform Radio Link Monitoring (RLM)/Beam Failure Detection (BFD)/Radio Resource Management (RRM) in SCG. When SCG is activated, if neither Radio Link Failure (RLF) nor Beam Failure (BF) occurs while SCG is deactivated, and if the TA timer is running, the UE may perform RACH-less activation.

If BF occurs while the SCG is deactivated, the UE may indicate BF to NW via SCG failure information message, so that the network can reconfigure the UE to keep the PSCell and allow RACH-less activation by changing BFD RS.

However, since the SCG failure information message procedure has a MAC reset procedure, which includes the expiration of the TA timer, the UE cannot perform RACH-less activation without a valid TA timer. Therefore, skipping SCG MAC reset in SCG deactivated state may be beneficial for RACH-less activation, that is, fast SCG activation.

According to some embodiments of the present disclosure, in order to reduce UE power consumption in NR-DC operation, the UE may be configured to deactivate SCG. For the fast SCG re-activation, the UE may be configured to perform RLM or BFD in deactivated SCG. When the UE sends SCG failure information message via MCG due to RLF or BF, the UE may check the SCG state to determine whether to skip SCG MAC reset.

### 1. Skipping MAC reset for RLF and BF

When the UE sends SCG failure information message via MCG due to RLF or BF, it checks the SCG state. If the SCG is in the deactivated state, MAC (that is, a MAC entity or a MAC layer of the UE) related to the SCG may be not reset. Otherwise, MAC related to the SCG may be reset. For example, the MAC related to the SCG may be referred as SCG MAC (that is, SCG MAC entity).

### (1) Case 1

For example, upon RLF occurring in SCG, the UE may initiate SCG failure information procedure.

If the SCG is in the deactivated state, MAC related to the SCG may be not reset.

If the SCG is in the activated state, MAC related to the SCG may be reset.

For example, upon BF occurring in SCG, the UE may initiate SCG failure information procedure.

If the SCG is in the deactivated state, MAC related to the SCG may be not reset.

If the SCG is in the activated state, MAC related to the SCG may be reset.

### (2) Case 2

For example, upon RLF occurring in SCG, the UE may initiate SCG failure information procedure.

If the SCG is in the deactivated state, MAC related to the SCG may be not reset.

If the SCG is in the activated state, MAC related to the SCG may be reset.

For example, upon BF occurring in SCG, the UE may determine whether to initiate SCG failure information procedure based on the SCG state.

If the SCG is in the deactivated state, the UE may initiate SCG failure information procedure, and MAC related to the SCG may be not reset.

If the SCG is in the activated state, the UE may not initiate SCG failure information procedure.

### 2. Skipping MAC reset for BF only

When the UE sends SCG failure information message via MCG due to BF, it may check the SCG state. If the SCG is in the deactivated state, MAC related to the SCG may be not reset. Otherwise, MAC related to the SCG may be reset.

### (3) Case 3

For example, upon BF occurring in SCG, the UE may initiate SCG failure information procedure.

If the SCG is in the deactivated state, MAC related to the SCG may be not reset.

If the SCG is in the activated state, MAC related to the SCG may be reset.

### (4) Case 4

For example, upon BF occurring in SCG, the may UE determine whether to initiate SCG failure information procedure based on the SCG state.

If the SCG is in the deactivated state, the UE may initiate SCG failure information procedure. MAC related to the SCG may be not reset.

If the SCG is in the activated state, the UE may not initiate SCG failure information procedure.

### 3. Skipping MAC reset for RLF only

When the UE sends SCG failure information message via MCG due to RLF, it may check the SCG state. If the SCG is in the deactivated state, MAC related to the SCG may be not reset. Otherwise, MAC related to the SCG may be reset.

### (5) Case 5

For example, upon RLF occurring in SCG, the UE may initiate SCG failure information procedure.

If the SCG is in the deactivated state, MAC related to the SCG may be not reset.

If the SCG is in the activated state, MAC related to the SCG may be reset.

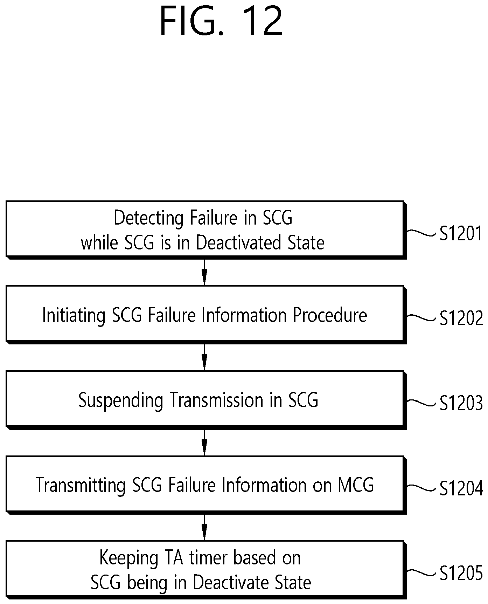

FIG. 12 shows an example of a method for skipping MAC reset during SCG failure information procedure in a wireless communication system, according to some embodiments of the present disclosure.

In step S1201, UE may detect a failure in SCG while the SCG is in deactivated state;

In step S1202, UE may initiating SCG failure information procedure.

In step S1203, UE may suspend transmission in the SCG.

In step S1204, UE may transmit SCG failure information on MCG.

In step S1205, UE may keep TA timer based on the SCG being in the deactivate state.

In other words, the SCG failure information procedure may include (1) suspending transmission in the SCG; (2) transmitting SCG failure information on MCG; and (3) keeping TA timer based on the SCG being in the deactivate state.

For example, MAC related to the SCG (that is, an SCG MAC entity or an SCG MAC layer) may be not reset based on the SCG being in the deactivated state.

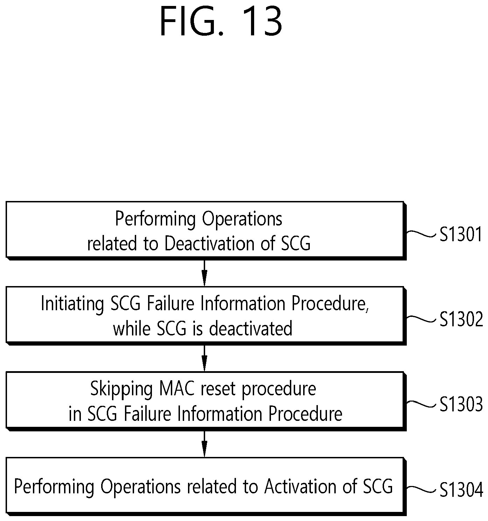

FIG. 13 shows an example of UE operations for RACH-less activation in a wireless communication system are described.

In step S1301, UE may perform operations related to deactivation of SCG.

For example, the network may deactivate the configured SCG.

The MAC entity (that is, the MAC entity of the UE) shall for the configured SCG:
1> if upper layers indicate that the SCG is deactivated:
   2> deactivate all the SCells of the SCG;
   2> deactivate SCG according to the timing;
   2> clear any configured downlink assignment and any configured uplink grant Type 2 associated with the PSCell respectively;
   2> suspend any configured uplink grant Type 1 associated with the PSCell;
   2> reset MAC.
1> if the SCG is deactivated:
   2> not transmit SRS on the PSCell;
   2> not report CSI for the PSCell;
   2> not transmit on UL-SCH on the PSCell;
   2> not transmit PUCCH on the PSCell;
   2> not transmit on RACH on the PSCell;
   2> not monitor the PDCCH on the PSCell.

That is, UE may reset MAC upon deactivation of SCG. In other words, UE may initiate MAC reset procedure based on the deactivation of SCG.

For example, the MAC reset procedure for SCG deactivation is as below. In other words, UE may perform the following operation in the MAC reset procedure for SCG deactivation.

For example, an example of a MAC Reset procedure is as below.

If a reset of the MAC entity is requested by upper layers, the MAC entity shall:
1> if the MAC reset is not due to SCG deactivation:
   2> initialize *Bj* for each logical channel to zero;
1> initialize *SBj* for each logical channel to zero if Sidelink resource allocation mode 1 is configured by RRC;
1> if upper layers indicate SCG deactivation and *bfd-and-RLM* with value *true* is configured for the deactivated SCG:
   2> stop (if running) all timers except *beamFailureDetectionTimer* associated with PSCell and *timeAlignmentTimers.*
1> else:
   2> stop (if running) all timers, except MBS broadcast DRX timers;
   2> consider all *timeAlignmentTimers, inactivePosSRS-TimeAlignmentTimer,* and *cg-SDT-TimeAlignmentTimer,* if configured, as expired and perform the corresponding actions related to Maintenance of Uplink Time Alignment;
1> set the NDIs for all uplink HARQ processes to the value 0;
1> sets the NDIs for all HARQ process IDs to the value 0 for monitoring PDCCH in Sidelink resource allocation mode 1;
1> stop, if any, ongoing Random Access procedure;
1> discard explicitly signalled contention-free Random Access Resources for 4-step RA type and 2-step RA type, if any;
1> flush Msg3 buffer;
1> flush MSGA buffer;
1> cancel, if any, triggered Scheduling Request procedure;
1> cancel, if any, triggered Buffer Status Reporting procedure;
1> cancel, if any, triggered Power Headroom Reporting procedure;
1> cancel, if any, triggered consistent LBT failure;
1> cancel, if any, triggered BFR;
1> cancel, if any, triggered Sidelink Buffer Status Reporting procedure;
1> cancel, if any, triggered Pre-emptive Buffer Status Reporting procedure;
1> cancel, if any, triggered Timing Advance Reporting procedure;
1> cancel, if any, triggered Recommended bit rate query procedure;
1> cancel, if any, triggered Configured uplink grant confirmation;
1> cancel, if any, triggered configured sidelink grant confirmation;
1> cancel, if any, triggered Desired Guard Symbol query;
1> cancel, if any, triggered Positioning Measurement Gap Activation/Deactivation Request procedure;
1> cancel, if any, triggered SDT procedure;
1> flush the soft buffers for all DL HARQ processes, except for the DL HARQ process being used for MBS broadcast;
1> for each DL HARQ process, consider the next received transmission for a TB as the very first transmission;
1> release, if any, Temporary C-RNTI;
1> if upper layers indicate SCG deactivation and *bfd-and-RLM* with value *true* is not configured; or
1> if the MAC reset is not due to SCG deactivation:
   2> reset all *BFI_COUNTERs*;
reset all *LBT_COUNTERs.*

That is, in the MAC reset procedure for SCG deactivation, if beam failure detection is configured for the UE, the UE may stop all timers except *beamFailureDetectionTimer* associated with PSCell and *timeAlignmentTimer*s. In other words, in the MAC reset procedure for SCG deactivation, the UE may maintain the *timeAlignmentTimer*s (TATs).

In step S 1302, UE may initiate an SCG failure information procedure, while the SCG is deactivated.

For example, UE may initiate the SCG failure information procedure based on detecting a beam failure.

In step S 1303, the UE may skip a MAC reset procedure in the SCG failure information procedure. For example, the MAC reset procedure, which is not initiated upon deactivation of the SCG, may include stopping a TAT for the SCG.

For example, when the UE initiate the SCG failure information procedure based on detecting beam failure of the SCG, the UE may skip the MAC reset procedure, which includes stopping a TAT for the SCG in the SCG failure information procedure.

For example, the purpose of the SCG failure information procedure procedure is to inform E-UTRAN or NR MN about an SCG failure the UE has experienced i.e. SCG radio link failure, failure of SCG reconfiguration with sync, SCG configuration failure for RRC message on SRB3, SCG integrity check failure, and consistent uplink LBT failures on PSCell for operation with shared spectrum channel access.

A UE initiates the procedure to report SCG failures when neither MCG nor SCG transmission is suspended and when one of the following conditions is met:
1> upon detecting radio link failure for the SCG;
1> upon detecting beam failure of the PSCell while the SCG is deactivated;
1> upon reconfiguration with sync failure of the SCG;
1> upon SCG configuration failure;
1> upon integrity check failure indication from SCG lower layers concerning SRB3.

Upon initiating the procedure, the UE shall:
1> if the procedure was not initiated due to beam failure of the PSCell while the SCG is deactivated:
   2> suspend SCG transmission for all SRBs, DRBs and, if any, BH RLC channels;
   2> reset SCG MAC;
1> stop T304 for the SCG, if running;
1> stop conditional reconfiguration evaluation for CPC or CPA, if configured;
1> if the UE is in (NG)EN-DC:
   2> initiate transmission of the *SCGFailurelnformationNR* message.
1> else:
   2> initiate transmission of the *SCGFailurelnformation* message.

In step S1304, UE may perform operations related to activation of SCG. For example, the UE may perform the RACH-less activation for the deactivated SCG, since the TAT is not expired. In other words, the UE may activate the SCG according to the timing for direct SCG activation without a Random Access Procedure.

For example, the network may activate the configured SCG.

The MAC entity (that is, the MAC entity of the UE) shall for the configured SCG:
1> if upper layers indicate that SCG is activated:
   2> if *BFI_COUNTER >= beamFailurelnstanceMaxCount* for the PSCell or the *timeAlignmentTimer* associated with PTAG is not running:
      3> indicate to upper layers that a Random Access Procedure is needed for SCG activation.
   2> else:
      3> activate the SCG according to the timing for direct SCG activation.
   2> (re-)initialize any suspended configured uplink grants of configured grant Type 1 associated with this PSCell according to the stored configuration, if any, and to start in the symbol;
   2> apply normal SCG operation including:
      3> SRS transmissions on the PSCell;
      3> CSI reporting for the PSCell;
      3> PDCCH monitoring on the PSCell;
      3> PUCCH transmissions on the PSCell;
      3> transmit on RACH on the PSCell;
      3> initialize *Bj* for each logical channel to zero.

According to some embodiments of the present disclosure, the upper layers of the UE may indicate that SCG is activated upon receiving an RRC Reconfiguration.

For example, the UE shall perform the following actions upon reception of the *RRCReconfiguration,* or upon execution of the conditional reconfiguration (CHO, CPA or CPC):
1> if the UE is configured with E-UTRA *nr-SecondaryCellGroupConfig* (UE in (NG)EN-DC):
   2> if the *RRCReconfiguration* message was received via E-UTRA SRB 1; or
   2> if the *RRCReconfiguration* message was received via E-UTRA RRC message *RRCConnectionReconfiguration* within *MobilityFromNRCommand* (handover from NR standalone to (NG)EN-DC);
      3> if the *scg-State* is not included in the E-UTRA *RRCConnectionReconfiguration* message or E-UTRA *RRCConnectionResume* message containing the *RRCReconfiguration* message:
         4> perform SCG activation;
         4> if *reconfigurationWithSync* was included in *spCellConfig* of an SCG:
            5> initiate the Random Access procedure on the PSCell;
         4> else if the SCG was deactivated before the reception of the E-UTRA RRC message containing the *RRCReconfiguration* message:
            5> if *bfd-and-RLM* was not configured to *true* before the reception of the E-UTRA *RRCConnectionReconfiguration* or *RRCConnectionResume* message containing the *RRCReconfiguration* message or if lower layers indicate that a Random Access procedure is needed for SCG activation:
               6> initiate the Random Access procedure on the SpCell;
            5> else:
               6> the procedure ends;
1 > if the *RRCReconfiguration* message was received via SRB 1 within the *nr-SCG* within *mrdc-SecondaryCellGroup* (UE in NR-DC, *mrdc-SecondaryCellGroup* was received in *RRCReconfiguration* or *RRCResume* via SRB1):
   2> if the *scg-State* is not included in the *RRCReconfiguration* or *RRCResume* message containing the *RRCReconfiguration* message:
      3> if the SCG was deactivated before the reception of the NR RRC message containing the *RRCReconfiguration* message:
         4> perform SCG activation;
      3> if *reconfigurationWithSync* was included in *spCellConfig* in nr-SCG:
         4> initiate the Random Access procedure on the PSCell;
      3> else if the SCG was deactivated before the reception of the NR RRC message containing the *RRCReconfiguration* message:
         4> if *bfd-and-RLM* was not configured to *true* before the reception of the *RRCReconfiguration* or *RRCResume* message containing the *RRCReconfiguration* message; or
         4> if lower layers indicate that a Random Access procedure is needed for SCG activation:
            5> initiate the Random Access procedure on the PSCell;
         4> else:
            5> the procedure ends;

For example, Upon initiating the SCG activation as described above, the UE shall:
1> if the UE is configured with an SCG after receiving the message for which this procedure is initiated:
   2> if the UE was configured with a deactivated SCG before receiving the message for which this procedure is initiated:
      3> consider the SCG to be activated;
      3> resume performing radio link monitoring on the SCG, if previously stopped;
      3> indicate to lower layers to resume beam failure detection on the PSCell, if previously stopped;
      3> indicate to lower layers that the SCG is activated.

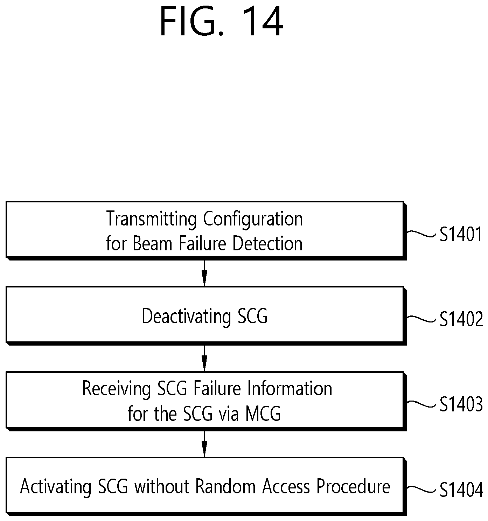

FIG. 14 shows an example of Base Station (BS) operations for RACH-less activation in a wireless communication system, according to some embodiments of the present disclosure.

In step S1401, aBS may transmit, to a wireless device, a configuration for beam failure detection for a SCG.

In step S1402, a BS may deactivate the SCG.

In step S1403, a BS may receive, from the wireless device, SCG Failure Information for the SCG via a Master Cell Group (MCG).

In step S1404, a BS may activate the SCG without a random access procedure.

Some of the detailed steps shown in the examples of FIGS. 11, 12, 13, and 14 may not be essential steps and may be omitted. In addition to the steps shown in FIGS. 11, 12, 13, and 14, other steps may be added, and the order of the steps may vary. Some of the above steps may have their own technical meaning.

Hereinafter, an apparatus for RACH-less activation in a wireless communication system, according to some embodiments of the present disclosure, will be described. Herein, the apparatus may be a wireless device (100 or 200) in FIGS. 2, 3, and 5.

For example, a wireless device may perform the methods described above. The detailed description overlapping with the above-described contents could be simplified or omitted.

Referring to FIG. 5, a wireless device 100 may include a processor 102, a memory 104, and a transceiver 106.

According to some embodiments of the present disclosure, the processor 102 may be configured to be coupled operably with the memory 104 and the transceiver 106.

The processor 102 may be configured to deactivate a Secondary Cell Group (SCG). The processor 102 may be configured to detect a beam failure of a Primary SCell (PSCell) in the SCG. The processor 102 may be configured to initiate a SCG failure information procedure to report the SCG failure. The processor 102 may be configured to skip a Media Access Control (MAC) reset procedure. For example, the MAC reset procedure may include stopping a Time Alignment Timer (TAT) for the SCG. The processor 102 may be configured to control the transceiver 106 to transmit SCG failure information via a Master Cell Group (MCG). The processor 102 may be configured to determine that a random access procedure is not needed for activation of the SCG, based on the TAT being not expired.

For example, the processor 102 may be configured to keep the TAT running, upon deactivating the SCG.

For example, the processor 102 may be configured to activate the SCG based on the TAT without performing a random access procedure.

For example, the processor 102 may be configured to control the transceiver 106 to receive, from a network, a configuration for beam failure detection.

According to some embodiments of the present disclosure, the processor 102 may be configured to detect a radio link failure of the PSCell in the SCG, initiate a SCG failure information procedure to report the SCG failure, and perform a MAC reset procedure, wherein the MAC reset procedure includes stopping a TAT for the SCG.

The processor 102 may be configured to determine that a random access procedure is needed for activation of the SCG, based on the TAT is expired.

The processor 102 may be configured to activate the SCG by performing a random access procedure.

For example, the processor 102 may be configured to control the transceiver 106 to receive, from a network, a configuration for radio link failure detection.

For example, Physical Downlink Control Channel (PDCCH) monitoring and/or Physical Uplink Shared Channel (PUSCH) transmission for the SCG may be not performed by the wireless device, while the SCG is deactivated.

For example, the TAT may include a Time Alignment Timer associated with a Primary Timing Advance Group (PTAG).

For example, the processor 102 may be configured to configure a beam failure instance counter for the PSCell. The processor 102 may be configured to increment the beam failure instance counter based on detecting a beam failure instance for the PSCell. In this case, it may be determined that the random access procedure is not needed for activation of the SCG, based on the value of the beam failure instance counter for the PSCell being less than a maximum value.

For example, the processor 102 may be configured to control the transceiver 106 to receive, from a network, (1) a radio resource control (RRC) Reconfiguration message and/or (2) an RRC Resume message including the RRC Reconfiguration message. The processor 102 may be configured to perform the activation of the SCG.

For example, the processor 102 may be configured to skip to perform the random access procedure for the activation of the SCG, based on the RRC Reconfiguration message not including a reconfigurationWithSync.

For example, the processor 102 may be configured to skip to perform the random access procedure for the activation of the SCG, based on (1) beam failure detection (BFD) and radio link monitoring (RLM) being configured before reception of the RRC Reconfiguration message, and (2) determining that the random access procedure is not needed for activation of the SCG.

For example, the processor 102 may be configured to control the transceiver 106 to be in communication with at least one of a user equipment, a network, or an autonomous vehicle other than the wireless device.

Hereinafter, a processor for a wireless device for RACH-less activation in a wireless communication system, according to some embodiments of the present disclosure, will be described.

The processor may be configured to control the wireless device to deactivate a Secondary Cell Group (SCG). The processor may be configured to control the wireless device to detect a beam failure of a Primary SCell (PSCell) in the SCG. The processor may be configured to control the wireless device to initiate a SCG failure information procedure to report the SCG failure. The processor may be configured to control the wireless device to skip a Media Access Control (MAC) reset procedure. For example, the MAC reset procedure may include stopping a Time Alignment Timer (TAT) for the SCG. The processor may be configured to control the wireless device to transmit SCG failure information via a Master Cell Group (MCG). The processor may be configured to control the wireless device to determine that a random access procedure is not needed for activation of the SCG, based on the TAT being not expired.

For example, the processor may be configured to control the wireless device to keep the TAT running, upon deactivating the SCG.

For example, the processor may be configured to control the wireless device to activate the SCG based on the TAT without performing a random access procedure.

For example, the processor may be configured to control the wireless device to receive, from a network, a configuration for beam failure detection.

According to some embodiments of the present disclosure, the processor may be configured to control the wireless device to detect a radio link failure of the PSCell in the SCG, initiate a SCG failure information procedure to report the SCG failure, and perform a MAC reset procedure, wherein the MAC reset procedure includes stopping a TAT for the SCG.

The processor may be configured to control the wireless device to determine that a random access procedure is needed for activation of the SCG, based on the TAT is expired.

The processor may be configured to control the wireless device to activate the SCG by performing a random access procedure.

For example, the processor may be configured to control the wireless device to receive, from a network, a configuration for radio link failure detection.

For example, Physical Downlink Control Channel (PDCCH) monitoring and/or Physical Uplink Shared Channel (PUSCH) transmission for the SCG may be not performed by the wireless device, while the SCG is deactivated.

For example, the TAT may include a Time Alignment Timer associated with a Primary Timing Advance Group (PTAG).

For example, the processor may be configured to control the wireless device to configure a beam failure instance counter for the PSCell. The processor may be configured to control the wireless device to increment the beam failure instance counter based on detecting a beam failure instance for the PSCell. In this case, it may be determined that the random access procedure is not needed for activation of the SCG, based on the value of the beam failure instance counter for the PSCell being less than a maximum value.

For example, the processor may be configured to control the wireless device to receive, from a network, (1) a radio resource control (RRC) Reconfiguration message and/or (2) an RRC Resume message including the RRC Reconfiguration message. The processor may be configured to control the wireless device to perform the activation of the SCG.

For example, the processor may be configured to control the wireless device to skip to perform the random access procedure for the activation of the SCG, based on the RRC Reconfiguration message not including a reconfigurationWithSync.

For example, the processor may be configured to control the wireless device to skip to perform the random access procedure for the activation of the SCG, based on (1) beam failure detection (BFD) and radio link monitoring (RLM) being configured before reception of the RRC Reconfiguration message, and (2) determining that the random access procedure is not needed for activation of the SCG.

For example, the processor may be configured to control the wireless device to be in communication with at least one of a user equipment, a network, or an autonomous vehicle other than the wireless device.

Hereinafter, a non-transitory computer-readable medium has stored thereon a plurality of instructions for RACH-less activation in a wireless communication system, according to some embodiments of the present disclosure, will be described.

According to some embodiment of the present disclosure, the technical features of the present disclosure could be embodied directly in hardware, in a software executed by a processor, or in a combination of the two. For example, a method performed by a wireless device in a wireless communication may be implemented in hardware, software, firmware, or any combination thereof. For example, a software may reside in RAM memory, flash memory, ROM memory, EPROM memory, EEPROM memory, registers, hard disk, a removable disk, a CD-ROM, or any other storage medium.

Some example of storage medium is coupled to the processor such that the processor can read information from the storage medium. In the alternative, the storage medium may be integral to the processor. The processor and the storage medium may reside in an ASIC. For other example, the processor and the storage medium may reside as discrete components.

The computer-readable medium may include a tangible and non-transitory computer-readable storage medium.

For example, non-transitory computer-readable media may include random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, or any other medium that can be used to store instructions or data structures. Non-transitory computer-readable media may also include combinations of the above.

In addition, the method described herein may be realized at least in part by a computer-readable communication medium that carries or communicates code in the form of instructions or data structures and that can be accessed, read, and/or executed by a computer.

According to some embodiment of the present disclosure, a non-transitory computer-readable medium has stored thereon a plurality of instructions. The stored a plurality of instructions may be executed by a processor of a wireless device.

The stored a plurality of instructions may cause the wireless device to deactivate a Secondary Cell Group (SCG). The stored a plurality of instructions may cause the wireless device to detect a beam failure of a Primary SCell (PSCell) in the SCG. The stored a plurality of instructions may cause the wireless device to initiate a SCG failure information procedure to report the SCG failure. The stored a plurality of instructions may cause the wireless device to skip a Media Access Control (MAC) reset procedure. For example, the MAC reset procedure may include stopping a Time Alignment Timer (TAT) for the SCG. The stored a plurality of instructions may cause the wireless device to transmit SCG failure information via a Master Cell Group (MCG). The stored a plurality of instructions may cause the wireless device to determine that a random access procedure is not needed for activation of the SCG, based on the TAT being not expired.

For example, the stored a plurality of instructions may cause the wireless device to keep the TAT running, upon deactivating the SCG.

For example, the stored a plurality of instructions may cause the wireless device to activate the SCG based on the TAT without performing a random access procedure.

For example, the stored a plurality of instructions may cause the wireless device to receive, from a network, a configuration for beam failure detection.

According to some embodiments of the present disclosure, the stored a plurality of instructions may cause the wireless device to detect a radio link failure of the PSCell in the SCG, initiate a SCG failure information procedure to report the SCG failure, and perform a MAC reset procedure, wherein the MAC reset procedure includes stopping a TAT for the SCG.

The stored a plurality of instructions may cause the wireless device to determine that a random access procedure is needed for activation of the SCG, based on the TAT is expired.

The stored a plurality of instructions may cause the wireless device to activate the SCG by performing a random access procedure.

For example, the stored a plurality of instructions may cause the wireless device to receive, from a network, a configuration for radio link failure detection.

For example, Physical Downlink Control Channel (PDCCH) monitoring and/or Physical Uplink Shared Channel (PUSCH) transmission for the SCG may be not performed by the wireless device, while the SCG is deactivated.

For example, the TAT may include a Time Alignment Timer associated with a Primary Timing Advance Group (PTAG).

For example, the stored a plurality of instructions may cause the wireless device to configure a beam failure instance counter for the PSCell. The stored a plurality of instructions may cause the wireless device to increment the beam failure instance counter based on detecting a beam failure instance for the PSCell. In this case, it may be determined that the random access procedure is not needed for activation of the SCG, based on the value of the beam failure instance counter for the PSCell being less than a maximum value.

For example, the stored a plurality of instructions may cause the wireless device to receive, from a network, (1) a radio resource control (RRC) Reconfiguration message and/or (2) an RRC Resume message including the RRC Reconfiguration message. The stored a plurality of instructions may cause the wireless device to perform the activation of the SCG.

For example, the stored a plurality of instructions may cause the wireless device to skip to perform the random access procedure for the activation of the SCG, based on the RRC Reconfiguration message not including a reconfigurationWithSync.

For example, the stored a plurality of instructions may cause the wireless device to skip to perform the random access procedure for the activation of the SCG, based on (1) beam failure detection (BFD) and radio link monitoring (RLM) being configured before reception of the RRC Reconfiguration message, and (2) determining that the random access procedure is not needed for activation of the SCG.

According to some embodiments of the present disclosure, the stored a plurality of instructions may cause the wireless device to be in communication with at least one of a user equipment, a network, or an autonomous vehicle other than the wireless device.

Hereinafter, a base station (BS) for RACH-less activation in a wireless communication system, according to some embodiments of the present disclosure, will be described.

The BS may include a transceiver, a memory, and a processor operatively coupled to the transceiver and the memory.

The processor may be configured to control the transceiver to transmit, to a wireless device, a configuration for beam failure detection for a SCG. The processor may be configured to deactivate the SCG for the wireless device. The processor may be configured to receive, from the wireless device, SCG Failure Information for the SCG via a Master Cell Group (MCG).

The processor may be configured to activate the SCG for the wireless device without a random access procedure.

The present disclosure can have various advantageous effects.

According to some embodiments of the present disclosure, a wireless device could efficiently activate an SCG without a RACH procedure by maintaining a valid TA timer.

In other words, the valid TA timer remaining upon SCG reactivation may be an important factor for RACH-less activation. The reason that the wireless device sends the SCG failure information message may be to obtain reconfiguration for RACH-less activation, so the TA timer should continue to run during the SCG failure information procedure. Therefore, according to the present disclosure, skipping MAC reset during SCG failure information procedure in SCG deactivated state could be beneficial for RACH-less activation, that is, fast SCG activation.

For example, in the case of BF, since a TA timer could be maintained, RACH-less activation could be efficiently performed.

According to some embodiments of the present disclosure, a wireless network system could provide an efficient solution for the RACH-less activation procedure by considering a TA timer.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a User Equipment, UE, for a wireless communication system, the method comprising:
deactivating (S1101) a Secondary Cell Group, SCG;
detecting (S1102) a beam failure of a Primary SCell, PSCell, in the SCG;
initiating (S1103) a SCG failure information procedure upon detecting the beam failure of the PSCell in the SCG while the SCG is deactivated;
skipping (S1104) a Media Access Control, MAC, reset procedure, wherein the MAC reset procedure includes (i) stopping a Time Alignment Timer, TAT, for the SCG and (ii) considering the TAT for the SCG as expired;
transmitting (S1105) SCG failure information message;
determining (S1106) that a random access procedure is not needed for activation of the SCG, based on the TAT being not expired; and
activating the SCG based on the determination.

2. The method of claim 1, wherein the method further comprises,
receiving, from a network, a configuration for beam failure detection for the PSCell in the SCG.

3. The method of claim 1,
wherein Physical Downlink Control Channel, PDCCH, monitoring and/or Physical Uplink Shared Channel, PUSCH, transmission for the SCG are not performed by the UE, while the SCG is deactivated.

4. The method of claim 1,
wherein the TAT includes a Time Alignment Timer associated with a Primary Timing Advance Group, PTAG.

5. The method of claim 1, wherein the method further comprises,
configuring a beam failure instance counter for the PSCell; and
incrementing the beam failure instance counter based on detecting a beam failure instance for the PSCell,
wherein it is determined that the random access procedure is needed for activation of the SCG, based on the value of the beam failure instance counter for the PSCell being equal to or greater than a maximum value.

6. The method of claim 1,
wherein the UE is in communication with at least one of a user equipment, a network, or an autonomous vehicle other than the UE.

7. A User Equipment, UE, (100) for a wireless communication system comprising:
a transceiver (106);
a memory (104); and
at least one processor (102) operatively coupled to the transceiver (106) and the memory (104), and configured to:
deactivate (S1101) a Secondary Cell Group, SCG;
detect (S 1 102) a beam failure of a Primary SCell, PSCell, in the SCG;
initiate (S 1103) a SCG failure information procedure upon detecting the beam failure of the PSCell in the SCG while the SCG is deactivated;
skip (S 1104) a Media Access Control, MAC, reset procedure, wherein the MAC reset procedure includes (i) stopping a Time Alignment Timer, TAT, for the SCG and (ii) considering the TAT for the SCG as expired;
transmit (S 1105) SCG failure information message;
determine (S 1106) that a random access procedure is not needed for activation of the SCG, based on the TAT being not expired; and
activate the SCG based on the determination.

8. A non-transitory computer-readable medium having stored thereon a plurality of instructions, which, when executed by a processor of a User Equipment, UE, cause the UE to perform operations, the operations comprises,
deactivating (S 1101) a Secondary Cell Group, SCG;
detecting (S 1 102) a beam failure of a Primary SCell, PSCell, in the SCG;
initiating (S 1103) a SCG failure information procedure upon detecting the beam failure of the PSCell in the SCG while the SCG is deactivated;
skipping (S 1104) a Media Access Control, MAC, reset procedure, wherein the MAC reset procedure includes (i) stopping a Time Alignment Timer, TAT, for the SCG and (ii) considering the TAT for the SCG as expired;
transmitting (S 1105) SCG failure information message;
determining (S 1106) that a random access procedure is not needed for activation of the SCG, based on the TAT being not expired; and
activating the SCG based on the determination.

## Patentansprüche

1. Verfahren, das von einem Benutzergerät, UE, für ein drahtloses Kommunikationssystem durchgeführt wird, wobei das Verfahren Folgendes umfasst:
Deaktivieren (S1101) einer sekundären Zellgruppe, SCG;
Detektieren (S1102) eines Strahlausfalls einer primären SCell, PSCell, in der SCG;
Einleiten (S1103) eines SCG-Ausfallinformationsvorgangs nach dem Detektieren des Strahlausfalls der PSCell in der SCG, während die SCG deaktiviert ist;
Überspringen (S1104) eines Media Access Control, MAC,-Rücksetzungsvorgangs, wobei der MAC-Rücksetzungsvorgang (i) das Stoppen eines Laufzeitkorrektur-Zeitgebers, TAT, für die SCG und (ii) das Betrachten des TAT für die SCG als abgelaufen enthält;
Übertragen (S1105) einer SCG-Ausfallinformationsnachricht;
Bestimmen (S1106), dass ein Zufallszugriffsvorgang für das Aktivieren der SCG nicht erforderlich ist, basierend darauf, dass der TAT nicht abgelaufen ist; und
Aktivieren der SCG basierend auf dem Bestimmen.

2. Verfahren nach Anspruch 1, wobei das Verfahren ferner Folgendes umfasst:
Empfangen einer Konfiguration zur Strahlausfalldetektion für die PSCell in der SCG von einem Netzwerk.

3. Verfahren nach Anspruch 1,
wobei das Überwachen des physikalischen Downlink-Steuerkanals, PDCCH, und/oder das Übertragen des physikalischen gemeinsam genutzten Uplink-Kanals, PUSCH, für die SCG nicht durch das UE durchgeführt werden, während die SCG deaktiviert ist.

4. Verfahren nach Anspruch 1,
wobei der TAT einen Laufzeitkorrektur-Zeitgeber umfasst, der einer primären Timing Advance-Gruppe, PTAG, zugeordnet ist.

5. Verfahren nach Anspruch 1, wobei das Verfahren ferner Folgendes umfasst:
Konfigurieren eines Strahlausfall-Instanzenzählers für die PSCell; und
Inkrementieren des Strahlausfall-Instanzenzählers basierend auf dem Detektieren einer Strahlausfall-Instanz für die PSCell,
wobei bestimmt wird, dass der Direktzugriffsvorgang für das Aktivieren der SCG erforderlich ist, basierend darauf, dass der Wert des Strahlausfall-Instanzenzählers für die PSCell gleich oder größer als ein Maximalwert ist.

6. Verfahren nach Anspruch 1,
wobei das UE mit mindestens einem von einem Benutzergerät, einem Netzwerk oder einem autonomen Fahrzeug außer dem UE in Verbindung steht.

7. Benutzergerät, UE, (100) für ein drahtloses Kommunikationssystem, Folgendes umfassend:
einen Transceiver (106);
einen Speicher (104); und
mindestens einen Prozessor (102), der operativ mit dem Transceiver (106) und dem Speicher (104) gekoppelt und für Folgendes konfiguriert ist:
Deaktivieren (S1101) einer sekundären Zellgruppe, SCG;
Detektieren (S1102) eines Strahlausfalls einer primären SCell, PSCell, in der SCG;
Einleiten (S1103) eines SCG-Ausfallinformationsvorgangs nach dem Detektieren des Strahlausfalls der PSCell in der SCG, während die SCG deaktiviert ist;
Überspringen (S1104) eines Media Access Control, MAC,-Rücksetzungsvorgangs, wobei der MAC-Rücksetzungsvorgang (i) das Stoppen eines Laufzeitkorrektur-Zeitgebers, TAT, für die SCG und (ii) das Betrachten des TAT für die SCG als abgelaufen enthält;
Übertragen (S1105) einer SCG-Ausfallinformationsnachricht;
Bestimmen (S1106), dass ein Zufallszugriffsvorgang für das Aktivieren der SCG nicht erforderlich ist, basierend darauf, dass der TAT nicht abgelaufen ist; und
Aktivieren der SCG basierend auf dem Bestimmen.

8. Nichtflüchtiges computerlesbares Medium, auf dem eine Vielzahl von Anweisungen gespeichert sind, die, wenn sie von einem Prozessor eines Benutzergeräts, UE, ausgeführt werden, das UE dazu veranlassen, Operationen durchzuführen, wobei die Operationen Folgendes umfassen:
Deaktivieren (S1101) einer sekundären Zellgruppe, SCG;
Detektieren (S1102) eines Strahlausfalls einer primären SCell, PSCell, in der SCG;
Einleiten (S1103) eines SCG-Ausfallinformationsvorgangs nach dem Detektieren des Strahlausfalls der PSCell in der SCG, während die SCG deaktiviert ist;
Überspringen (S1104) eines Media Access Control, MAC,-Rücksetzungsvorgangs, wobei der MAC-Rücksetzungsvorgang (i) das Stoppen eines Laufzeitkorrektur-Zeitgebers, TAT, für die SCG und (ii) das Betrachten des TAT für die SCG als abgelaufen enthält;
Übertragen (S1105) einer SCG-Ausfallinformationsnachricht;
Bestimmen (S1106), dass ein Zufallszugriffsvorgang für das Aktivieren der SCG nicht erforderlich ist, basierend darauf, dass der TAT nicht abgelaufen ist; und
Aktivieren der SCG basierend auf dem Bestimmen.

## Revendications

1. Procédé réalisé par un équipement utilisateur, UE, pour un système de communication sans fil, le procédé comprenant :
la désactivation (S1101) d'un groupe de cellules secondaires, SCG ;
la détection (S1102) d'une défaillance de faisceau d'une SCell primaire, PSCell, dans le SCG ;
l'initiation (S1103) d'une procédure d'information de défaillance SCG à la détection de la défaillance de faisceau de la PSCell dans le SCG alors que le SCG est désactivé ;
le saut (S1104) d'une procédure de réinitialisation de contrôle d'accès au support, MAC, dans lequel la procédure de réinitialisation MAC comprend (i) l'arrêt d'une temporisation d'alignement temporel, TAT, pour le SCG et (ii) la considération de la TAT pour le SCG comme expirée ;
l'émission (51105) d'un message d'information de défaillance de SCG ;
la détermination (S1106) qu'une procédure d'accès aléatoire n'est pas nécessaire pour une activation du SCG, sur la base de la TAT qui n'a pas expiré ; et
l'activation du SCG sur la base de la détermination.

2. Procédé selon la revendication 1, dans lequel le procédé comprend en outre la réception, à partir d'un réseau, d'une configuration pour une détection de défaillance de réseau pour la PSCell dans le SCG.

3. Procédé selon la revendication 1,
dans lequel une surveillance de canal physique de contrôle de liaison descendante, PDCCH, et/ou une émission de canal physique partagé de liaison montante, PUSCH, pour le SCG ne sont pas réalisées par l'UE, alors que le SCG est désactivé.

4. Procédé selon la revendication 1,
dans lequel la TAT comprend une temporisation d'alignement temporel associée à un groupe d'avance temporelle primaire, PTAG.

5. Procédé selon la revendication 1, dans lequel le procédé comprend en outre la configuration d'un compteur d'instance de défaillance de faisceau pour la PSCell ; et
l'incrémentation du compteur d'instance de défaillance de faisceau sur la base de la détection d'une instance de défaillance de faisceau pour la PSCell,
dans lequel il est déterminé que la procédure d'accès aléatoire est nécessaire pour une activation du SCG, sur la base de la valeur du compteur d'instance de défaillance de faisceau pour la PSCell qui est égale ou supérieure à une valeur maximale.

6. Procédé selon la revendication 1,
dans lequel l'UE est en communication avec au moins un parmi un équipement utilisateur, un réseau ou un véhicule autonome autre que l'UE.

7. Équipement utilisateur, UE, (100) pour un système de communication sans fil, comprenant :
un émetteur-récepteur (106) ;
une mémoire (104) ; et
au moins un processeur (102) couplé en fonctionnement à l'émetteur-récepteur (106) et à la mémoire (104), et configuré pour :
désactiver (S1101) un groupe de cellules secondaires, SCG ;
détecter (S1102) une défaillance de faisceau d'une SCell primaire, PSCell, dans le SCG;
initier (S1103) une procédure d'information de défaillance SCG à la détection de la défaillance de faisceau de la PSCell dans le SCG alors que le SCG est désactivé ;
sauter (S1104) une procédure de réinitialisation de contrôle d'accès au support, MAC, dans lequel la procédure de réinitialisation MAC comprend (i) l'arrêt d'une temporisation d'alignement temporel, TAT, pour le SCG et (ii) la considération de la TAT pour le SCG comme expirée ;
émettre (S1105) un message d'information de défaillance de SCG ;
déterminer (S1106) qu'une procédure d'accès aléatoire n'est pas nécessaire pour une activation du SCG, sur la base de la TAT qui n'a pas expiré ; et
activer le SCG sur la base de la détermination.

8. Support non transitoire lisible par ordinateur ayant une pluralité d'instructions stockées dessus, qui, quand elles sont exécutées par un processeur d'un équipement utilisateur, UE, amènent l'UE à réaliser des opérations, les opérations comprennent la désactivation (S1101) d'un groupe de cellules secondaires, SCG ;
la détection (S1102) d'une défaillance de faisceau d'une SCell primaire, PSCell, dans le SCG ;
l'initiation (S1103) d'une procédure d'information de défaillance SCG à la détection de la défaillance de faisceau de la PSCell dans le SCG alors que le SCG est désactivé ;
le saut (S1104) d'une procédure de réinitialisation de contrôle d'accès au support, MAC, dans lequel la procédure de réinitialisation MAC comprend (i) l'arrêt d'une temporisation d'alignement temporel, TAT, pour le SCG et (ii) la considération de la TAT pour le SCG comme expirée ;
l'émission (51105) d'un message d'information de défaillance de SCG ;
la détermination (S1106) qu'une procédure d'accès aléatoire n'est pas nécessaire pour une activation du SCG, sur la base de la TAT qui n'a pas expiré ; et l'activation du SCG sur la base de la détermination.
